Europäisches Patentamt

European Patent Office

Office européen des brevets

(11) Veröffentlichungsnummer: **0 463 339 A2**

# EUROPÄISCHE PATENTANMELDUNG

(21) Anmeldenummer: **91107641.2**

(22) Anmeldetag: **10.05.91**

(51) Int. Cl.5: **G08B 13/19**

(30) Priorität: **25.06.90 DE 4020175**

(43) Veröffentlichungstag der Anmeldung:
**02.01.92 Patentblatt 92/01**

(84) Benannte Vertragsstaaten:
**AT BE CH DE DK ES FR GB GR IT LI LU NL SE**

(71) Anmelder: **MARINITSCH, Waldemar**
**Putzbrunner Strasse 43**
**W-8000 München 83(DE)**

(72) Erfinder: **MARINITSCH, Waldemar**
**Putzbrunner Strasse 43**
**W-8000 München 83(DE)**

(74) Vertreter: **WILHELMS, KILIAN & PARTNER**
**Patentanwälte**
**Eduard-Schmid-Strasse 2**
**W-8000 München 90(DE)**

(54) **Vorrichtung zur Failsafeprüfung einer Infrarotsensoranordnung.**

(57) Vorrichtung zur Failsafeprüfung einer wenigstens einen Infrarotsensor (2) aufweisenden Infrarotsensoranordnung für einen Gefahrenmelder. Der Infrarotsensor (2) ist über Verstärker (13, 14) mit fünf Komparatoren (1, 3, 15, 18, 19) verbunden, die verschiedene Schwellenwerte haben und mit ihren Ausgängen mit einem Signalprozessor (4) verbunden sind. Es ist ein Infrarotsignalgeber (7) so vorgesehen, daß seine Infrarotsignale vom Infrarotsensor (2) erfaßt werden. Der Infrarotsignalgeber (7) wird vom Signalprozessor (4) in regelmäßigen Abständen angesteuert. Der Signalprozessor (4) ist so ausgebildet, daß er das zeitliche Auftreten der Grundsignale des Infra-rotsensors (2) über einen Komparator (1) überwacht, feststellt, ob innerhalb eines bestimmten Zeitintervalls nach dem Ausgeben des Auslöseimpulses für den Infrarotsignalgeber (7) ein Reaktionsimpuls über einen weiteren Komparator (3, 18) ankommt, und ein Alarmsignal ausgibt, wenn im Gefahrenfall über den dritten Komparator (15, 19) ein entsprechendes impulsförmiges Signal anliegt. Die Auslösesignale des Signalprozessors (4) liegen teilweise über eine Ansteuerstufe (5) an einer Alarmgebereinrichtung (6), die mit einem Abschaltrelais der überwachten Anlage verbunden sein kann.

Fig.1

EP 0 463 339 A2

Die Erfindung betrifft eine Vorrichtung zur Failsafeprüfung einer Infrarotsensoranordnung nach dem Gattungsbegriff des Patentanspruchs 1. Eine derartige Vorrichtung dient zur Dauerfailsafeprüfung, d.h. zur Selbstprüfung der Infrarotsensoranordnung auf ihre Funktionsfähigkeit, wobei eine derartige Infrarotsensoranordnung als Gefahrenmelder auf verschiedenen Verwendungsgebieten vorgesehen wird.

Gefahrenmelder werden unter anderem zum Raumschutz, als Arbeitsplatzsicherung, als Einbruchsicherung, beispielsweise in Museen, und als Alarmeinrichtungen bei Fahrzeugen, insbesondere bei Förderzeugen, verwandt, um ein Alarmsignal zu erzeugen, wenn sich beispielsweise eine Person dem Fahrzeug nähert. Ein derartiger Gefahrenmelder mit einer Infrarotsensoranordnung ist beispielsweise in der älteren deutschen Patentanmeldung P 38 37 054.9 beschrieben. Derartige Gefahrenmelder nehmen über ihre Infrarotsensoren Warmequellen wahr, die in den Überwachungsbereich der Infrarotsensoranordnung eintreten, wobei das Ausgangssignal der Sensoren zu einem Auslösesignal verarbeitet wird, das an der eigentlichen Alarmgebereinrichtung des Gefahrenmelders liegt.

Aus Gründen der Betriebssicherheit ist es bei derartigen Gefahrenmeldern notwendig, während des Betriebes fortlaufend eine Failsafeprüfung durchzuführen, um sich zu vergewissern, daß die Anlage fehlerfrei arbeitet und/oder eingeschaltet ist. Wenn insbesondere beispielsweise das Fenster eines Infrarotsensors verklebt ist, oder die Mindesttransmission der Fensterfolie nicht mehr gewährleistet ist, dann arbeiten die Sensoranordnung und somit der Gefahrenmelder nicht fehlerfrei, sie sind sozusagen blind. Das hat zur Folge, daß auftretende Gefahren nicht mehr erfaßt und gemeldet werden können.

Im Gegensatz zu aktiven, d.h. signalgebenden und signalempfangenden Sensoren, ist es jedoch bei passiven Infrarotsensoranordnungen nicht möglich, periodisch Probeläufe durchzuführen, da Infrarotsensoranordnungen keine eigenen Signale aussenden, über deren Empfang auf die Funktionsfähigkeit geschlossen werden könnte.

Aus der älteren deutschen Patentanmeldung P 39 09 073.6 ist bereits ein Verfahren zur Dauerfailsafeprüfung einer Infrarotsensoranordnung eines Gefahrenmelders bekannt, bei dem die auf das Rauschen zurückzuführenden Grundsignale des Infrarotsensors hochverstärkt und in digitale Signale umgewandelt werden, deren zeitliches Auftreten überwacht wird, wobei dann, wenn ein Ausfall der digitalen Signale über ein vorbestimmtes Zeitintervall festgestellt wird, ein Fehleralarm ausgelöst wird. Bei diesem Verfahren können in regelmäßigen Abständen auch Testreizungssignale am Infrarotsensor ausgelöst werden.

Die der Erfindung zugrundeliegende Aufgabe besteht darin, eine Vorrichtung nach dem Gattungsbegriff des Patentanspruchs 1 zu schaffen, die nach dem obigen Verfahrensprinzip arbeitet und für eine umfassende Failsafeprüfung der Bauteile der Infrarotsensoranordnung sorgt.

Diese Aufgabe wird gemäß der Erfindung durch die Ausbildung gelöst, die im Kennzeichen des Patentanspruchs 1 angegeben ist.

Bei der erfindungsgemäßen Vorrichtung wird somit zum einen das regelmäßige Auftreten der sog. Grundsignale am Infrarotsensor überwacht, wobei diese Grundsignale auch ohne eine Wärmequelle, beispielsweise aufgrund der thermischen Bewegung der Luft, erzeugt werden, jedoch einen Pegel haben, der unter dem Wert liegt, der zum Auslösen eines Alarmes führen würde. Wenn diese Grundsignale ausfallen, wird ein entsprechender Störungsalarm gegeben, da dann davon ausgegangen wird, daß der Infrarotsensor nicht mehr richtig arbeitet. Zum anderen wird bei der erfindungsgemäßen Vorrichtung in regelmäßigen Abständen am Infrarotsignalgeber ein Testsignal ausgelöst, das vom Infrarotsensor empfangen wird und zu einem entsprechenden Ausgangssignal des Infrarotsensors führt. Es wird überwacht, ob innerhalb einer bestimmten Zeitspanne nach dem Auslösen des Infrarotsignalgebers bzw. nach dem Erzeugen eines diesen Signalgeber ansteuernden Signalimpulses das entsprechende Ausgangssignal des Infrarotsensors ankommt. Wenn das nicht der Fall ist, wird gleichfalls ein Störungsalarm ausgelöst, da dann davon ausgegangen wird, daß das Ansprechvermögen des Infrarotsensors beeinträchtigt ist. Da das Testsignal des Infrarotsignalgebers einen Pegel hat, der zu einem Ausgangssignal des Infrarotsensors mit einem Pegel führt, der über dem Pegel der Grundsignale, aber unter dem Pegel der eigentlichen, einen Alarm auslösenden Signale liegt, wird während dieser Überwachungszeit die Überwachung der Grundsignale ausgesetzt, um zu verhindern, daß der Testsignalimpuls auch als ein statistisches Grundsignal verarbeitet wird.

Durch die bei der erfindungsgemäßen Vorrichtung vorgesehene einander überlagernde Überwachung sowohl der statistischen Grundsignale als auch der in regelmäßigen Abständen erzeugten Testsignale ist die gemäß der Aufgabe der vorliegenden Erfindung zu erzielende umfassende Failsafeprüfung jederzeit gewährleistet.

Besonders bevorzugte Ausgestaltungen und Weiterbildungen der erfindungsgemäßen Vorrichtung sind Gegenstand der Patentansprüche 2 bis 8.

Im folgenden wird anhand der zugehörigen Zeichnung ein besonders bevorzugtes Ausführungsbeispiel der Erfindung näher beschrieben. Es zeigen

Fig. 1 das schematische Schaltbild des Ausführ-

rungsbeispiels der erfindungsgemäßen Vorrichtung,

Fig. 2A, B, C, D und E in Zeitdiagrammen die Wellenformen der an den verschiedenen Punkten der in Fig. 1 dargestellten Vorrichtung auftretenden Signale zur Erläuterung der Arbeitsweise des in Fig. 1 dargestellten Ausführungsbeispiels der Erfindung, und

Fig. 3 bis 5 schematische Schaltbilder weiterer Ausführungsbeispiele der Erfindung.

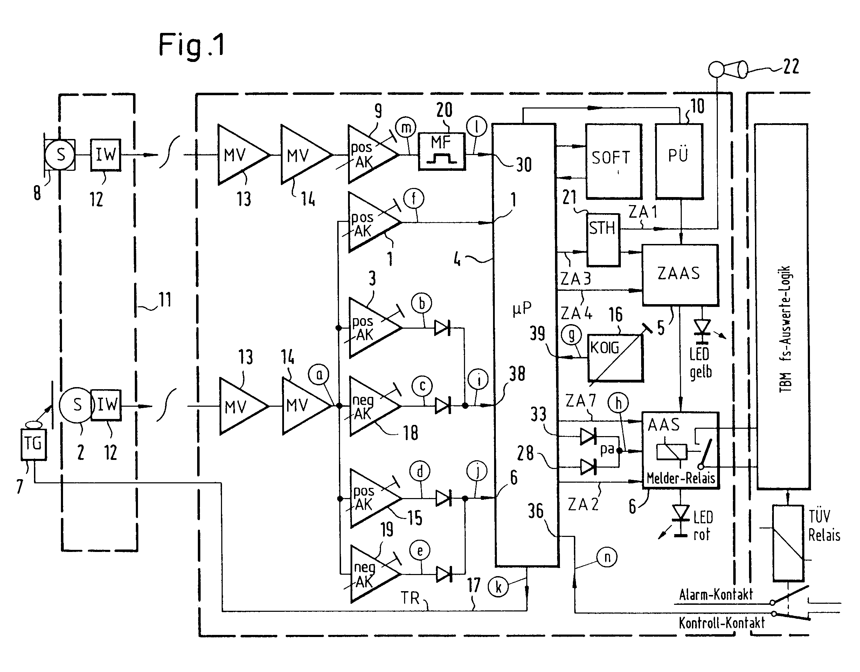

Fig. 1 zeigt das schematische Schaltbild eines Ausführungsbeispiels der erfindungsgemäßen Vorrichtung zur Failsafeprüfung einer Infrarotsensoranordnung eines Gefahrenmelders, beispielsweise für ein Flurförderzeug.

Bei einem derartigen Gefahrenmelder mit Failsafeprüfung ist grundsätzlich zwischen dem Arbeitsalarm und dem Störungsalarm zu unterscheiden.

Der Arbeitsalarm umfaßt den normalen Schutzalarm, beispielsweise den Personenschutzalarm sowie den Rauschalarm des Sensors, der lediglich die Aufgabe hat, zu melden, wenn aus irgendwelchen Gründen keine Außenreize mehr empfangen werden. Jeder empfangene Grundsignalimpuls, der auf einer statistisch auftretenden Außenreizung beruht, führt zum Auslösen einer gegebenen Laufzeit von beispielsweise 6 Min. und bestätigt somit den empfangsfähigen Zustand des Infrarotsensors, beispielsweise des Eintrittsfensters des Infrarotsensors. Es können Laufzeiten zwischen 1 Min. und 6 Min. und mehr gewählt werden.

Der Störungsalarm hat die Aufgabe, eine Störung in der der Sensoranordnung nachgeschalteten elektronischen Ausrüstung zu melden. Die Meldung eines Störungsalarms unterscheidet sich von der Form der Meldung des Arbeitsalarmes, beispielsweise dadurch, daß am Bedienungspult Lampen mit verschiedenen Farben abwechselnd blinken. Darüber hinaus muß ein Störungsalarm zwingend zu einer Alarmausgabe mit der zusätzlich verbundenen vom Arbeitsalarm unterscheidbaren Anzeige am Bedienungspult und an einer Melderleiterplatte führen.

Wie es in Fig. 1 dargestellt ist, umfaßt die Infrarotsensoranordnung zwei Infrarotsensoren 2 und 8, von denen ein Sensor 2 zusammen mit einem Impedanzwandler 12 innerhalb eines Gehäuses 11 angeordnet ist, während der weitere Sensor 8 als hochempfindlicher Außensensor außerhalb des Gehäuses 11 angeordnet ist, so daß er für die Überwachung des sog. "Umweltabschlusses" des Gefahrenmelders sorgt (statistische Zugluftmessung).

Der im Gehäuse 11 angeordnete Sensor 2 ist über den Impedanzwandler 12 mit einem ersten und einem zweiten Meßverstärker 13, 14 verbunden, die als Operationsverstärker ausgebildet sind.

Der erste Meßverstärker 13 kann als Tiefpaßverstärker mit einer Bandpaßbreite von 0,1 bis 3 Hz bei 3 dB Abfall oder 0,04 bis 7 Hz bei 12 dB Abfall bemessen sein. Dadurch wird der Körperschall des Sensors, ausgelöst durch mechanische Erschütterungen, nicht weiter verstärkt. Der zweite Meßverstärker 14 ist ein Linearverstärker, der gegenüber dem ersten Meßverstärker 13 invertiert angesteuert ist und somit aus der daraus entstehenden Phasenumkehr jeglicher Schwingneigung entgegenwirkt.

Das Ausgangssignal des Verstärkers 14 liegt über fünf Komparatoren 1, 3, 15, 18, 19 an einem Signalprozessor 4, der in Form eines Mikroprozessors ausgebildet sein kann. Die Komparatoren 18 und 19 haben die Aufgabe, auch die negative Abkühlkurve bzw. den negativ reagierenden Chipanteil des Sensors differenziert für bestimmte Überwachungsaufgabe heranziehen zu können. So kann beispielsweise der negative oder positive Meßstrahl getrennt in seiner Auslöseschwelle eingestellt werden.

Der Außensensor 8 ist in ähnlicher Weise über einen Impedanzwandler 12, Meßverstärker 13, 14 und einen Komparator 9 gleichfalls mit dem Signalprozessor 4 verbunden. Ein Monoflop 20, das zwischen dem Komparator 9 und dem Signalprozessor 4 liegt, dient dazu, den Signalprozessor 4 vor einer weiteren Langzeitschleife (6 Min.) zu bewahren und ist zur Zeitbestimmung vorgeschaltet.

Der Signalprozessor 4 wird mit einem 1 kHz. bis 2 kHz. Arbeitstakt zur zeitlichen Gewichtung (Fehleralarmausblendung) von einem Koinzidenzgenerator in Form eines Taktgebers 16 versorgt, wobei dieser Taktgeber 16 mit einer Zwangsalarmsignalansteuerstufe 5 verbunden ist, so daß ein Ausfall des Taktes zu einer entsprechenden Alarmmeldung führen wird.

Der Signalprozessor 4 verarbeitet die Ausgangssignale der Komparatoren 3, 18 und erzeugt dem Verarbeitungsergebnis entsprechende Ausgangssignale an seinem Ausgang, der mit der Zwangsalarmsignalansteuerstufe 5 verbunden ist, die ihrerseits eine Alarmgebereinrichtung 6 ansteuert. Die Alarmgebereinrichtung 6 ist beispielsweise mit einem akustischen oder optischen Alarmgeber bzw. mit einem Schaltrelais verbunden, das die zu überwachende Anlage abschalten kann. Der Ausgang des Signalprozessors 4, an dem dasjenige Ausgangssignal auftritt, das der Verarbeitung des Ausgangssignals der Komparatoren 15, 19 entspricht, ist direkt mit der Alarmgebereinrichtung 6 verbunden, da es sich dabei um das Signal handelt, das den eigentlichen Alarm bei einer Gefahrensituation auslöst, während die an der Zwangsalarmsignalansteuerstufe 5 liegenden Ausgangssignale des Signalprozessors 4 einen Alarm auslösen, wenn die Failsafeüberprüfung der Infrarotsensoranordnung mit nachgeschalteter Elektronik, die Prozeßüberwachung oder die Überwachung des Taktgebers 16 eine Störung ergeben hat.

Der Signalprozessor 4 erzeugt in regelmäßigen zeitlichen Abständen einen Impuls auf einer Ausgangsleitung 17, die mit einem Infrarotsignalgeber 7 verbunden ist, der sozusagen in Sichtweite des Infrarotsensors 2, d.h. so angeordnet ist, daß sein Infrarotausgangssignal, das beispielsweise ein Testreizsignal ist, vom Infrarotsensor empfangen werden kann. Der Infrarotsignalgeber 7 kann beispielsweise ein Thermogeber sein und erzeugt auf den Impuls vom Signalprozessor 4 ein Infrarotreizsignal, das am Infrarotsensor 2 zu einem Ausgangssignal mit einer bestimmten Breite und Höhe führt, wobei diese Höhe eine bestimmte Beziehung zu der Höhe der Grundsignale des Infrarotsensors 2 und zur Höhe der Ausgangssignale des Infrarotsensors 2 hat, die bei einer wirklichen Gefahrensituation auftreten.

Die Ausbildung kann beispielsweise derart sein, daß von einer Basissignalspannung von 6 V ausgehend der Pegel der verstärkten statistischen Grundsignale des Infrarotsensors 2 bis zu 6,15 V beträgt, während der Pegel der verstärkten Signale des Infrarotsensors 2 in einer Gefahrensituation, beispielsweise bei Annäherung einer Person in den Überwachungsbereich, zwischen 6,8 und 7,8 V liegt. Dementsprechend liefert der Infrarotsignalgeber 7 auf seinen Auslöseimpuls einen Infrarotimpuls, der beim Empfang am Infrarotsensor 2 zu einem genau definierten Ausgangssignal am Ausgang des Verstärkers 14 mit einem Pegel von 6,5 V führt. Entsprechende Schwellenwerte sind an den jeweiligen Komparatoren 1, 3, 15, 18, 19 als gewünschte Ansprechwerte mit Potentiometern festgelegt.

Der Infrarotsignalgeber 7 kann beispielsweise alle 5 s mit einem 200 ms Impuls vom Signalprozessor 4 angesteuert werden.

Der Signalprozessor 4 ist über eine Prozeßüberwachungsstufe 10 mit der Zwangsalarmsignalansteuerstufe 5 verbunden, die dazu dient, die Zwangsalarsignalansteuerstufe 5 zu betätigen, wenn die internen Arbeitsvorgänge des Signalprozessors gestört sind oder ausfallen. Diese Überwachungsschleife dient zur Überwachung des Signalprozessors 4 selbst.

Im folgenden wird die Arbeitsweise der oben beschriebenen Vorrichtung erläutert.

Wenn der Gefahrenmelder mit der Infrarotsensoranordnung aktiviert, d.h. eingeschaltet ist, dann erzeugen die Infrarotsensoren 2 und 8 auch ohne eine Gefahrensituation und ohne einen Testreiz durch den Infrarotsignalgeber 7 Ausgangssignale, die dem statistischen Rauschen entsprechen und beispielsweise durch die thermische Bewegung der Umgebungsluft ausgelöst werden. Diese Grundsignale haben einen sehr niedrigen Pegel, der, wie oben erwähnt, beispielsweise zwischen 6 V und 6,15 V liegen kann. Die Grundsignale liegen über die den Sensoren 2 und 8 nachgeschalteten Schaltkreise, insbesondere über die Komparatoren 1 und 9, am Signalprozessor 4. Die Komparatoren 1 und 9 vergleichen die anliegenden analogen Signale mit ihren bestimmten Schwellenwerten und erzeugen somit impulsförmige Ausgangssignale mit bestimmten Pegeln und mit Flanken an den Stellen, an denen die analogen Eingangssignale die bestimmten Schwellenwerte über- oder unterschreiten. Die Komparatoren 1, 9 arbeiten daher als eine Art einfacher Analogdigitalwandler, die eine ihnen eigene Schalthysterese haben.

Im Signalprozessor 4, der über interne Schmitt-Trigger-Programmierung auf die Flanken der Eingangsimpulse anspricht, die vom Komparator 1 kommen, werden die zeitlichen Abstände der ankommenden Impulse mit bestimmten Bezugszeitintervallen verglichen, wobei der Signalprozessor 4 dann ein Ausgangssignal der Alarmgebereinrichtung 6 liefert, wenn über die bestimmten Bezugszeitintervalle kein Signalimpuls vom Komparator 1 ankommt. Prinzipgleich wird das Signal vom Komparator 9 verarbeitet, allerdings mit dem Unterschied, daß das entsprechende Ausgangssignal vom Signalprozessor 4 an der Zwangsalarmsignalansteuerstufe 5 liegt.

Beispielsweise alle 5 s erzeugt der Signalprozessor 4 einen Impuls mit einer Breite von beispielsweise 200 ms über die Leitung 17, um den Infrarotsignalgeber 7 anzusteuern, so daß dieser einen Infrarotimpuls als Reizsignal aussendet, der vom Infrarotsensor 2 empfangen wird. Das dementsprechend vom Infrarotsensor 2 erzeugte Ausgangs- oder Testsignal liegt über dem Impedanzwandler 12 und die Verstärker 13, 14 an den Komparatoren 1, 3, 15, 18, 19, wobei die Komparatoren 3, 18 so ausgebildet sind, daß ihre Schwellenwerte über den Schwellenwerten des Komparators 1 und unter den Schwellenwerten der Komparatoren 15, 19 liegen, so daß sie nur auf diese Ausgangssignale des Infrarotsensors 2 ansprechen, die eine Folge der Testreizung sind. Die entsprechenden Impulssignale von den Komparatoren 3 und 18 liegen am Signalprozessor 4, wobei diese Impulssignale die Form einzelner Signalimpulse haben, deren Flanken an den Stellen liegen, die den bestimmten Schwellenwerten der Komparatoren 3, 18 entsprechen. Der Signalprozessor 4 überwacht die Zeit, die vergeht, bis nach Abgabe eines 200 ms Impulses an den Infrarotsignalgeber 7 der Reaktionssignalimpuls von den Komparatoren 3, 18 ankommt. Wenn diese Zeit über einem Bezugszeitintervall liegt, dann wird von einer Fehlfunktion ausgegangen und ein entsprechendes Alarmsignal vom Signalprozessor 4 an die Alarmgebereinrichtung, und zwar ebenfalls 5 s lang, gelegt. Im Störungsfall, d.h. dann, wenn beispielsweise das Fenster des Infrarotsensors 20 % seiner Transmission durch Verschmutzung verloren hat, wird der Betreiber der Anlage, die mit dem Gefahrenmelder versehen ist, durch einen rhythmischen im 5 Sekunden-Takt intermittierenden Betrieb aufgrund dieser besonderen Alarmeinrichtung auf diesen Zustand aufmerksam gemacht.

Da der Komparator 1 für die statistischen Grundsignale niedrige Schwellenwerte hat, spricht er auch auf die Ausgangssignale des Infrarotsensors 2 an, die eine Folge der Testreizung sind. Um daher zu verhindern, daß diese Ausgangssignale des Infrarotsensors als Grundsignale angesehen und verarbeitet werden, was zur Folge haben könnte, daß trotz zeitlich großer Lücken der Grundsignale kein entsprechender Alarm ausgelöst wird, da in die zeitlichen Lücken derartige Testreizungssignale fallen, wird die Auswertung der Ausgangssignale des Komparators 1 während des Zeitintervalls ausgesetzt, in das der Reaktionsimpuls auf eine Testreizung fallen müßte.

Wie es in der Zeichnung dargestellt ist, liegt das Ausgangssignal des Infrarotsensors 2 über dem Impedanzwandler 12, die Verstärker 13 und 14 auch an den Komparatoren 15 und 19, die auf Signale mit einem Pegel ansprechen, der über den Pegeln der oben genannten Signale bei einer Testreizung bzw. aufgrund des statistischen Grundrauschens liegt. Die Komparatoren 15, 19 sprechen daher auf die Signale an, die eine Folge einer tatsächlichen Gefahrensituation sind, wobei diese Signale vom Signalprozessor 4 zu einem Ausgangssignal verarbeitet werden, das direkt an der Alarmgebereinrichtung 6 zum Auslosen eines Arbeitsalarms liegt.

Das obige Ausführungsbeispiel der erfindungsgemäßen Vorrichtung kann insbesondere so ausgebildet sein, daß das Bezugszeitintervall, mit dem der zeitliche Abstand der Impulse des Ausgangsimpulssignals der Komparatoren 1 und 9 verglichen wird, bei 6 Min. liegt, so daß dann, wenn innerhalb eines Zeitintervalls von 6 Min. kein statistisch ausgelöster Impuls auftritt, von einer Fehlfunktion ausgegangen wird, und ein entsprechender Alarm ausgelöst wird. Das Zeitintervall, das auf das Ankommen eines Reaktionsimpulses auf die Testreizung überwacht wird, kann beispielsweise bei ca. 100 ms liegen, so daß dann, wenn innerhalb dieser Zeit nach Ausgeben des Auslöseimpulses auf der Leitung 17 kein Reaktionsimpuls am Signalprozessor 4 liegt, ein Alarm ausgelöst wird. Während dieses 100 ms Intervalls wird die Verarbeitung des Ausgangssignals des Komparators 1 wie oben angegeben ausgetaktet. Der Signalprozessor 4 kann weiterhin so ausgebildet sein, daß er nicht nur das Ankommen eines Impulssignals von den Komparatoren 15, 19 wahrnimmt, das eine Gefahrensituation meldet, sondern dieses Impulssignal auch hinsichtlich seiner zeitlichen Breite mißt, was über eine digitale zeitliche Abzählung des Arbeitstaktes vom Impulsgeber 16 möglich ist, um beispielsweise zu differenzieren, ob dieses Signal von einer starken oder weniger starken Wärmequelle kommt, damit beispielsweise zwischen Personen und Gegenständen im Gefahrenbereich unterschieden werden kann.

Es sei darauf hingewiesen, daß vom Alarm- oder Ausschaltrelais über gekoppelte Kontakte eine Rückmeldung zum Signalprozessor 4 vorgesehen ist, über die auch dieser Schaltkreis der Anordnung auf seine Funktion geprüft werden kann. Es ist weiterhin wichtig, bei der Weiterverarbeitung des abgegebenen Alarmsignals durch Fremdanlagen eine Möglichkeit der Warnung des Bedienungspersonals durch automatisches Intervallhupen vorzusehen. Das kann über die Hupensteuerung 21 und die nachgeschaltete Signalhupe 22 erreicht werden.

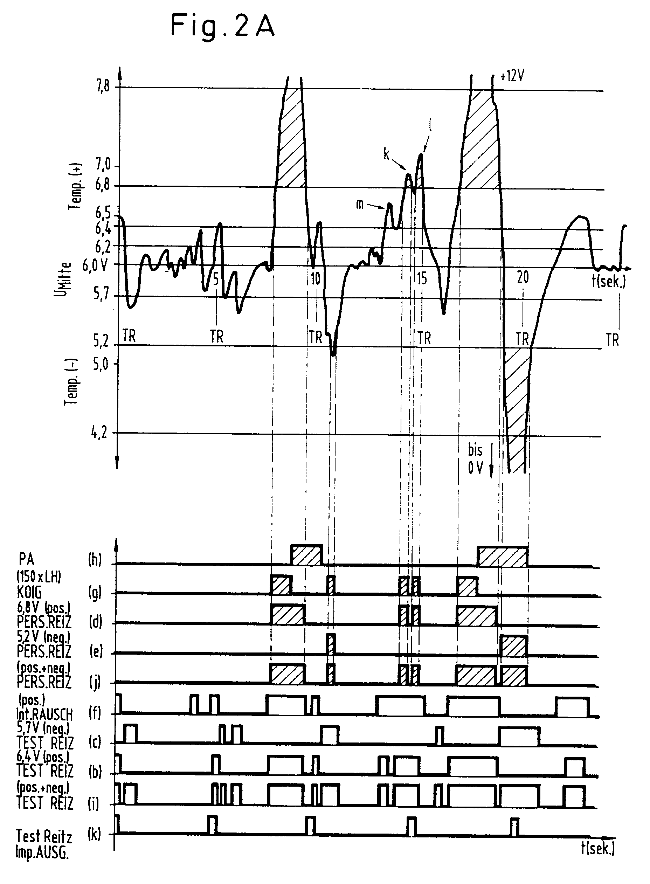

Im folgenden wird anhand der Fig. 2A bis 2E die Arbeitsweise des obigen Ausführungsbeispiels der erfindungsgemäßen Vorrichtung mehr im einzelnen beschrieben.

Die in den Fig. 2A bis 2E dargestellten Signalkurven sind in ihrer Verhältnismäßigkeit zum besseren Verständnis nur angenähert zu den Kurven wiedergegeben, die durch einen xy-Schreiber aufgezeichnet werden. So treten bei einem Personenalarm beispielsweise Auslöseimpulse auf, die die Komparatoren bis zu den Anschlagwerten von + 12 V und 0 V hin aussteuern.

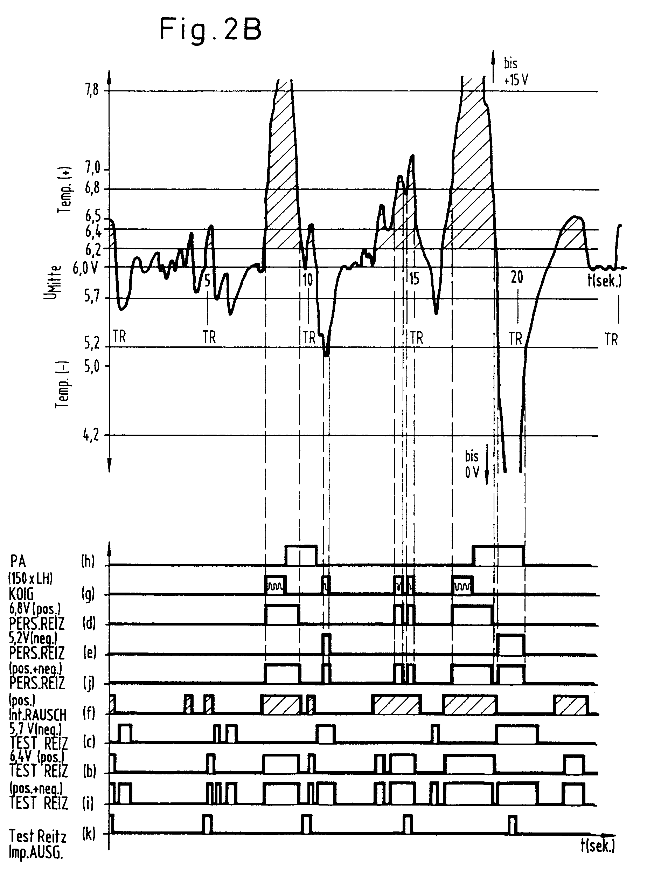

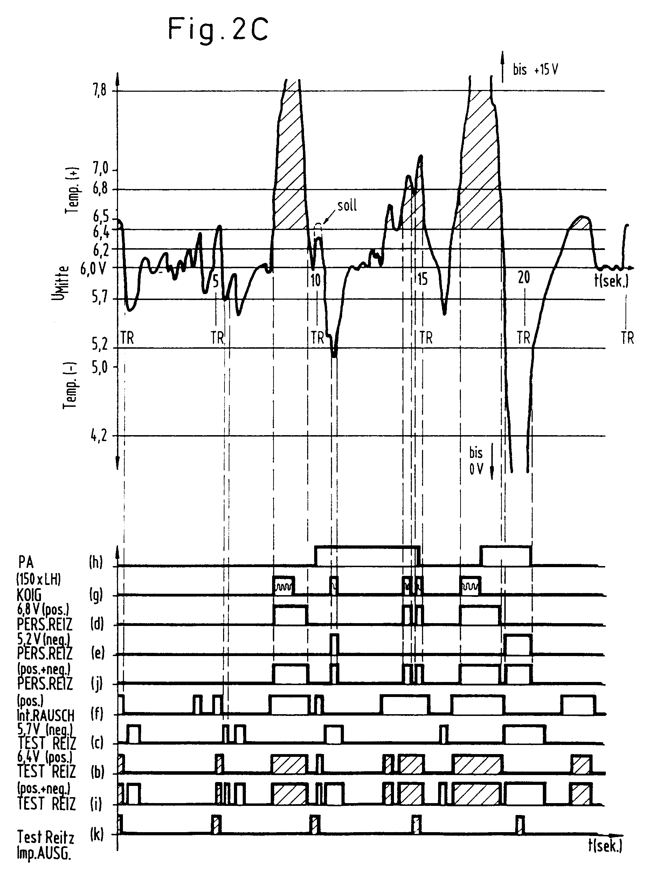

Die für die jeweiligen Situationen bei Auftreten eines Personenalarms, im gefahrenlosen Zustand, in dem nur Grundsignale erzeugt werden, und beim Auslösen einer Testreizung gemäß Fig. 2A, 2B und 2C relevanten Signale und Signalanteile sind schraffiert bzw. in anderer Form hervorgehoben dargestellt.

Wenn, wie es in Fig. 2A dargestellt ist, am Punkt a in Fig. 1 eine Sensorsignalspitze auftritt, die den eingestellten Schwellenwert von 6,8 V übersteigt, dann wird der Komparator 15 durchgesteuert, so daß er ein Ausgangssignal mit hohem Pegel an den Eingang 6 des Signalprozessors 4 legt. Zeitgleich wird am Signalprozessor 4 der Eingang 39 aus der Überwachungsschleife herausgenommen und wird der Taktgeber 16 direkt angeschlossen. Solange der Taktgeber 16 nicht gebraucht wird, prüft der Signalprozessor 4 seine Funktion und gibt der Signalprozessor 4 im Fehlerfall einen Zwangsalarm ZA4 aus. Der Taktgeber 16 hat eine variable Frequenzeinstellung, die in sechs Stufen über einen Schalter auf die entsprechende Ansprechzeit der Überwachungsanlage eingestellt wird. Die Frequenzeinstellung liegt zwischen 300 Hz und 1,5 kHz. Sobald diese beiden Signale anliegen, beginnt der Mikroprozessor 4 150 Übergänge vom hohen auf den niedrigen Pegel abzuzählen. Hat am Ende dieses Zählvorganges das Ausgangssignal des Komparators 15 weiterhin einen hohen Pegel, dann gibt der Signalprozessor 4 an seinen Ausgängen 33 und 28 ein Signal mit hohem Pegel aus, das die Alarmgebereinrichtung 6 ansteuert, die ihrerseits das Alarmrelais zum Abfallen bringt. Um eine größtmögliche Sicherheit zu erreichen, wird das Alarmsignal doppelt ausgegeben und über Entkopplungsdioden gesichert.

Sinngemäß gilt das gleiche bei einer negativen Sensorsignalspitze. Hierzu ist der Schwellenwert auf 5,2 V am negativen Komparator 19 eingestellt. Wie es aus dem Impulsdiagramm von Fig. 2A ersichtlich ist, in dem die Signalspitzen mit m, k und l bezeichnet sind, hat das Signal k kurzzeitig den Zählvorgang ausgelöst, aber nicht zum Alarm geführt, weil der Zählvorgang nicht abgeschlossen werden konnte. Somit ist dieser Fehlalarm verhindert worden.

In die Abfallphase der Impulsspitze k fällt nun aber der Testreizimpuls (an der Stelle 15 s), der sich an dieser Stelle aufaddiert und somit zu einer neuen Fehleralarmspitze l führt. Diese wird ebenso nach dem oben beschriebenen Prinzip unwirksam gemacht.

Die Schwellenwertspannung kann stufenlos zwischen 6,8 V (empfindliche Einstellung) und 7,8 V (unempfindliche Einstellung) vom Monteur der Überwachungsanlage am Komparator 15 eingestellt werden. Sinngemäß ist eine Einstellung zwischen 5,2 V und 4,2 V am Komparator 19 möglich.

In Fig. 2A ist aus der Zeile h ersichtlich, daß die Personenalarmausgabe im negativen Signalwellenbereich lediglich um die Überlappung und nicht um eine weitere Zählzeit verlängert wurde. Um den Alarm nur solange wie unbedingt notwendig aufrechtzuerhalten, wird in diesem Fall vom Mikroprozessor 4 von einem weiteren Zählvorgang abgesehen. Die Personalalarmausgabezeit ist fest auf mindestens 1,0 s programmiert.

Alle übrigen Impulsfolgen auf anderen Ebenen haben keinen Zutritt zu diesem Mikroprozessorprogramm und folglich auch keinen Einfluß.

Fig. 2B zeigt das Impulsdiagramm bezüglich des internen statistischen Rauschens.

Wenn davon ausgegangen wird, daß ein Innensensor von seiner Umwelt nur dann Reizimpulse empfangen kann, wenn ihm die Sicht nicht verstellt ist, dann bedeutet das im Umkehrsinn, daß ein fahrendes Flurförderzeug durch den Gefahrenmelder dann auch überwacht ist. Voraussetzung ist natürlich, daß zu dieser statistischen Überwachung zusätzlich eine zyklische Überwachung mit einem Testreiz kommt, der zeitgleich aktiv vorhanden ist und die anderen sicherheitsbestimmenden Parameter überwacht.

Der mit dem überwachten Flurförderzeug mitfahrende Sensor erhält ständig minimale Außenreize, die weit unter der Ansprechschwelle der Alarmstufe, d.h. dem entsprechenden Komparator, liegen. Diese und auch die starken Personenalarmimpulse, die ja auch statistischer Art sind und somit eine Bestätigung für die freie Sicht darstellen, setzen im Mikroprozessor 4 immer wieder eine digitale Laufzeit in Gang. Ab dem letzten Auslösepunkt läuft dann eine Laufzeit von beispielsweise 1 Min. ab, wobei der Mikroprozessor 4 am Ende dieser Laufzeit am Ausgang für den Personenalarm ein Ausgangssignal mit hohem Pegel an die Alarmgebereinrichtung 6 legt, die ihrerseits dann für den endgültigen Stillstand des Fahrzeuges sorgt. Dieser Zustand ist dann am Blinken der Melderleuchtdiode und der Leuchtdiode an der zugehörigen Elektronik erkennbar. Die codierte Blinkfolge gibt dann auch Auskunft, welcher Gefahrenmelder ausgelöst hat und aus welchem Grunde.

Um den zyklischen Testreiz fälschlicherweise nicht einzubeziehen, da dieser ja pegelmäßig gesehen den Rauschpegel durchläuft, setzt der Signalprozessor 4 während dieser Antwortphase des Testreizes die Auswertung des statistischen Rauschpegels für ca. 1 s aus.

Der nächste erneut auftretende Impuls löst die Laufzeit von neuem aus und hebt den Alarmzustand wieder auf. Der Auslöseimpuls durch eine statische Umweltreizung kann beispielsweise dann ausbleiben, wenn während einer Arbeitspause sich das Flurförderzeug beispielsweise am Ende eines Ganges an einer Wand befindet und die hinteren Gefahrenmelder daher nicht gereizt werden können. Durch eine Fahrt über etwa 1 m im Kriechgang werden dann alle Gefahrenmelder wieder in Funktion gesetzt.

Durch die obige Überwachung der statistischen Grundsignale wird sichergestellt, daß bei einer Undurchlässigkeit, beispielsweise bei einem Verkleben der Fenster der Infrarotsensoren ein entsprechender Alarm ausgelöst wird.

Fig. 2C zeigt das Impulsdiagramm für die Auslösung einer Testreizung.

Auf der Ebene k ist der regelmäßig alle 5 s aufgetastete Impuls für den Thermogeber 7 dargestellt. Seine Höhe und Dauer sind so definiert, daß im Sensor 2 eine positive Impulsspitze mit einem Pegel von 6,5 V am Verstärkerausgang a in Fig. 1 erzeugt wird.

Die genaue bekannte Größe ist das Maß zur Überprüfung der Fensterdurchlässigkeit sowie der dem Sensor 2 nachgeschalteten und von allen Stufen genutzten Elektronik.

Der am Thermogeber 7 eintreffende Reizstromimpuls mit einer Stärke von ca. 30 mA erzeugt am Punkt a eine Signalspitze von 6,5 V, die den positiven Komparator 3 zum Kippen bringt und zu einem Ausgangssignal mit hohem Pegel am Mikroprozessoreingang 38 führt. Zeitgleich mit der Impulsausgabe öffnet der Mikroprozessor 4 am Eingang 38 für eine definierte Zeit von beispielsweise 1 s, schließt aus dem Auftreten des Rückimpulses, daß kein Fehler vorliegt, und läßt daher das Programm ohne Unterbrechung weiterlaufen.

Wenn der Impuls zu klein ist oder im wesentlichen ausfällt, dann gibt der Mikroprozessor 4 an seinen Ausgängen 28, 33 für die Dauer von 5 s einen Zwangsalarm ZA 7 aus. Er erkennt nicht auf Störung (s. Stelle 10 s im Analogsignaldiagramm). Der Grund dafür liegt darin, daß das Fenster des Infrarotsensors 2, wenn überhaupt, nur allmählich verschmutzt. Daher soll der Fahrer am Fahrverhalten seines Fahrzeuges erkennen, daß etwas mit dem Gefahrenmelder nicht stimmt. Das Erkennungszeichen ist ein zyklisches Fahren über 5 s, ein Alarm über 5 s, ein Fahren über 5 s, ein Alarm über 5 s usw.. Der Fahrer kann an der zyklisch langsam blinkenden Leuchtdiode dann erkennen, welcher Melder die Ursache ist und somit noch im Anfangsstadium eines Fehlers diesen beheben lassen.

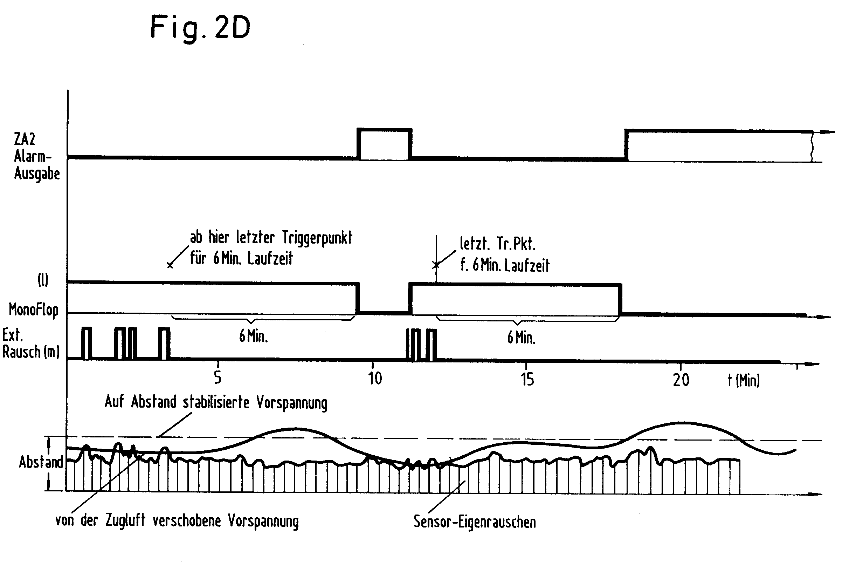

Fig. 2D zeigt ein Signaldiagramm für die Zugluftmessung, d.h. den sogenannten Umweltabschluß.

Der Umweltabschluß des Gefahrenmelders ist hochgradig durch die beiden vorher beschriebenen Überwachungsverfahren erfaßt. Sollte über den Gefahrenmelder aber eine Kunststofftüte aus einem sehr dünnen durchsichtigen Folienmaterial gezogen sein, dann sind noch gewisse Reize erkennbar, die in ihrer Intensität jedoch völlig verfälscht sind. Eine Erfassung durch die Überwachung der statistischen Grundsignale ist dann ausgeschlossen. Der Testreiz funktioniert unter dieser Haube gleichfalls weiter.

Es bleibt daher nur das Verfahren der Zugluftmessung. Der hochempfindliche Außensensor 8 wird im Normalfall ständig von sich leicht bewegender Luft mit, wenn auch nur geringfügig verschiedener Temperatur umweht. Die daraus resultierenden geringen Spannungspegel reichen bei fast stehender Luft nicht mehr aus, um den angeschlossenen Komparator 9 durchzusteuern.

Rauschmessungen haben ergeben, daß die sog. Pyroelemente einen für elektronische Bauteile außergewöhnlich hohen und sehr sprunghaften Rauschanteil besitzen. Diese Eigenschaft läßt sich als Vorteil dadurch ausnutzen, daß eine stabilisierte Bezugsspannung knapp über dem Rauschen festgelegt wird und somit eine Art Sieb gespannt wird. Die sich ganz langsam bewegende Luft erzeugt im angeschlossenen gleichstromgekoppelten Tiefpaßfilter noch eine Vorspannungsverschiebung von ein paar Zehntel Volt. Diese Verschiebung oder genauer gesagt diese Absenkung reicht aus, daß jetzt diese eigentlich lästigen Rauschspitzen zu sich rasch ändernden Impulsen führen, die sich gut weiterverarbeiten lassen. Das ist im unteren Teil von Fig. 2D dargestellt.

Die Vorspannung wird hart stabilisiert, aber über 1 %-ige Widerstände weich angelegt.

Die in dieser Weise gewonnenen Impulse starten das Monoflop 20 mit einer beispielsweise angenommen Zeitkonstante von 6 Min.. Ab dem letzten Triggerzeitpunkt läuft dann die Laufzeit von 6 Min. ab, so daß der Mikroprozessor 4 am Ende dieser Laufzeit am Ausgang für den Personenalarm ein Signal mit hohem Pegel an die Signalgebereinrichtung 6 abgibt, die ihrerseits den endgültigen Fahrzeugstillstand auslöst. Dieser Zustand ist dann am Blinken der entsprechenden Leuchtdioden erkennbar. Die codierte Blinkfolge der Störungsleuchtdiode gibt dann Auskunft, welcher Gefahrenmelder ausgelöst hat und aus welchem Grunde. Der nächste erneut auftretende Impuls startet die Laufzeit von neuem und hebt den Alarmzustand wieder auf.

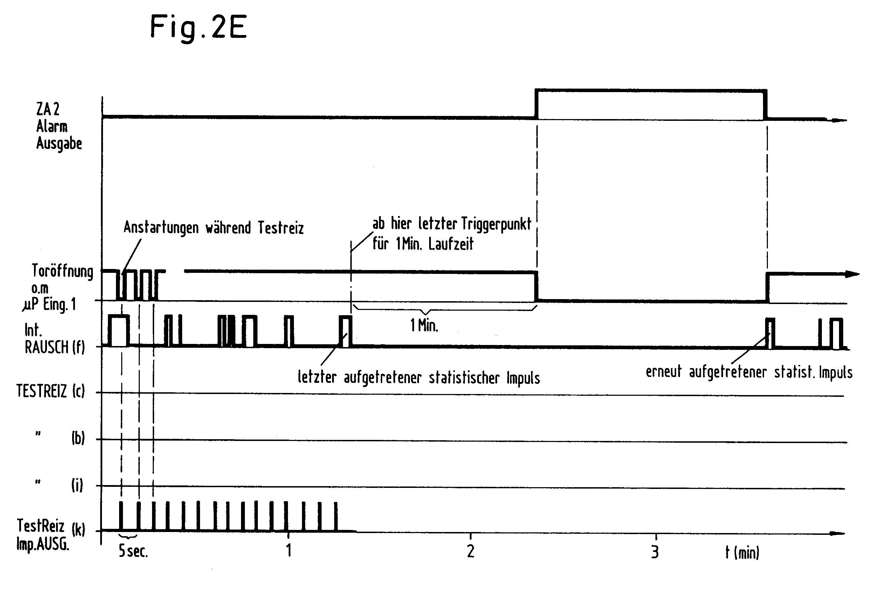

Fig. 2E zeigt in einem Impulsdiagramm die Verhältnisse bei der Überwachung der Grundsignale in Verbindung mit den gleichzeitig auftretenden Testreizungen auf der Ebene k.

Im folgenden werden besonders bevorzugte Möglichkeiten der Weiterbildung und Ausgestaltung des obigen Ausführungsbeispiels beschrieben.

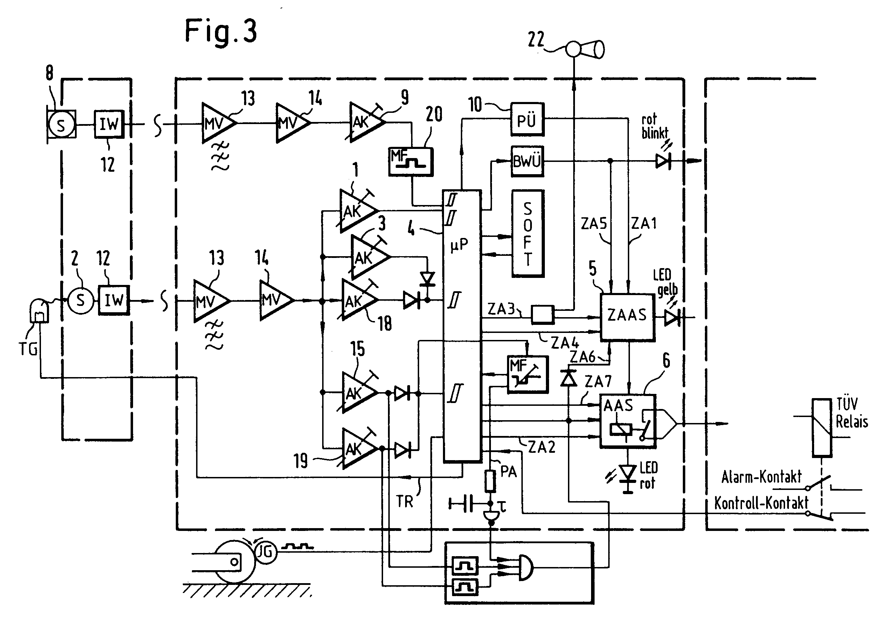

Es kann ein zweiter Kreis der Alarmausgabe vorgesehen sein, und zwar für den Fall einer programmstörung des Mikroprozessors, die keinen kompletten Ausfall des Mikroprozessors oder einen Programmstillstand darstellt, und die dazu führen könnte, daß die Komparatoren 15 und 19 ein Alarmsignal geben, das der Mikroprozessor 4 aber nicht weitergibt (Fig. 3).

Der zweite vom ersten Kreis unabhängige Alarmkreis könnte dadurch gebildet werden, daß der Taktgeber 16 in einen variablen Zeitgeber umgewandelt wird, daß ein dreifach UND-Glied eingesetzt wird, für jeden Komparator 15 und 19 ein Monoflop vorgesehen wird und ein kleines Zeitglied zur Verzögerung des Ansprechzeitpunktes gegenüber dem ersten Auftreten eines hohen Pegels von den Alarmkomperatoren vorgesehen wird.

Kommt vom Verstärker 14 ein Signal, das von der Höhe her geeignet ist, die Komparatoren 15 und 19 zu aktivieren, so wird je nach Richtung des Reizes zuerst der eine und nach dem Rückschwingen in der Abkühlphase des Sensors auch der andere Komparator ansprechen.

Die beiden nacheinander ankommenden Hochpegelspitzen kippen für ca. 2 s die Monoflops. Da aber der Mikroprozessor 4 entscheidet, nach welcher Alarmimpulsdauer Alarm ausgegeben wird, muß ein gewöhnlicher Zeitgeber, ein einstellbares Monoflop anstelle des Taktgebers 16 vorgesehen sein. Dieses Monoflop wird beim Auftreten eines ersten Alarmimpulses gestartet und versorgt den Mikroprozessor 4 sowie das Dreifach-UND-Glied 4073 über einen Inverter mit der Zeitinformation zur Fehlalarmausblendung. Ein kleines Zeitglied verhindert, daß das Gatter 1 schon durch die Startflanke auf den hohen Pegel kommt. Nach Ablauf des einstellbaren Monoflops kommt ein hoher Pegel vom Inverter, so daß das Gatter 1 auf einen hohen Pegel kommt. Der erste auftretende Alarmimpuls legt das Gatter 2 auf einen hohen Pegel. Nach dem Rückschwingen bringt der zweite Alarmkomperator das Gatter 3 auf einen hohen Pegel. Das Ausgangssignal des UND-Gliedes kommt auf einen hohen Pegel, wodurch die Alarmausgabebedingung erfüllt ist. Das Fehlen eines hohen Pegels eines der Komparatoren läßt das UND-Glied auf niedrigem Pegel. Nach Abklingen des Alarmimpulses kommt automatisch alles wieder auf den niedrigen Pegel. Ein schematisches Schaltbild dieser Abwandlungsform ist in Fig. 3 dargestellt.

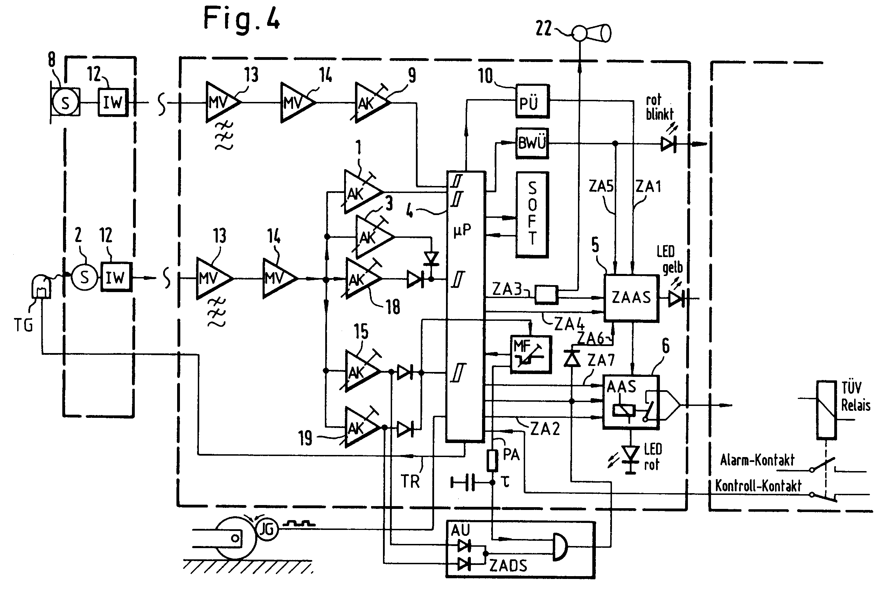

In Fig. 4 ist ein weiteres Ausführungsbeispiel der Erfindung dargestellt, das sich von dem in Fig. 3 dargestellten Ausführungsbeispiel dadurch unterscheidet, daß die Zugluftmessung durch das statistische Eigenrauschen des Sensors moduliert wird und vom Mikroprozessor 4 so ausgewertet und gegen eine Fehlinterpretation geschützt wird, daß das UND-Glied nur zwei Eingänge hat, daß der Inverter in der Zuleitung zum Eingang eins fehlt, daß das Monoflop am Signalprozessor mit negiertem Ausgang betrieben wird und daß die Monoflops am UND-Glied fehlen.

Langsame Luftströmungen lösen auf dem direkten Weg der Auswertung unter Umständen keine Komparatorimpulse aus. Wird die Ansprechschwelle des Komparators stabilisiert knapp über die statistischen Rauschspitzen gelegt, so werden immer dann, wenn der Luftzug den Durchschnittsgleichpegel etwas senkt, die Rauschspitzen durchstoßen und den nachgeschalteten Komparator sicher zum Ansprechen bringen. Eine mögliche Pegeldrift nach oben oder nach unten wird vom Mikroprozessor geprüft und zum Zwangsalarm gebracht.

Da es sehr schwierig für die Monoflops in der Zuleitung des UND-Gliedes ist, die Zeit zu definieren, könnte auf die ständige Überprüfung der beiden Komparatoren 15 und 19 verzichtet werden und könnten somit beide Ausgänge in einer Zeitaddierstufe zusammengefaßt werden, so daß immer mit dem zuerst auftretenden Impuls das Gatter 2 in Echtzeit auf den hohen Pegel gelegt wird. Das erscheint vertretbar, da bei jeder morgendlichen Inbetriebnahme eine im Programm des Mikroprozessors 4 festgelegte Personenalarmbegehungsphase zwingend durchgeführt werden muß. Es ist außerdem vorstellbar, daß in manchen Anwendungsfällen die vorliegende Anlage ohnehin erst kurz vor der Aktivierungsphase eingeschaltet wird.

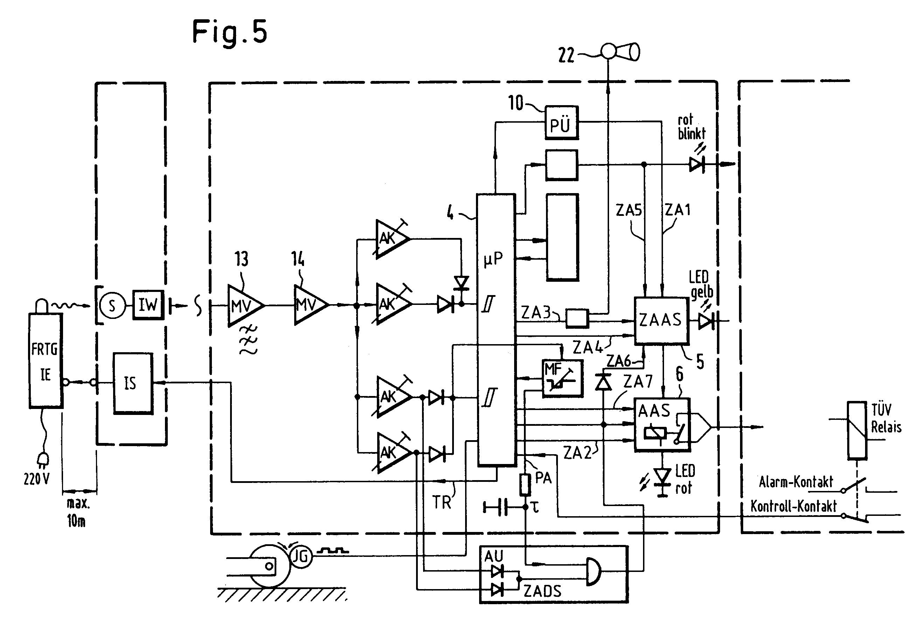

Fig. 5 zeigt ein weiteres Ausführungsbeispiel der Erfindung, das sich dadurch auszeichnet, daß der Testreizthermoimpuls nicht direkt vor dem Eintrittsfenster des Sensors, sondern in beliebiger Entfernung bis zu Metern entfernt erzeugt wird. Die Übermittlung des Testreizbefehls vom Gefahrenmelder zum Thermogeber hin erfolgt über einen ungebündelten codierten Infrarotlichtstrahl, was somit fehlersicher und durch die Umwelt nicht beeinflußbar in der Erkennungssicherheit ist.

Der Thermogeber entschlüsselt das empfangene Signal und sendet nach erkannter Übereinstimmung den in Dauer und Intensität definierten Thermoimpuls zurück zum Melder.

Die Überwachung des genauen Impulswertes hinter dem Eintrittsfenster des Sensors des Melders erfolgt automatisch und zwar auf ca. 20 % des vorgegebenen Meßwertes genau. Das heißt, daß eine Fensterverschmutzung von mehr als 20 % zu einem Zwangsalarm führt, was natürlich auch dann der Fall ist, wenn die überwachende Strecke an Transparenz verloren haben sollte.

Sollte aus irgendwelchen Gründen die Intensität des Thermoimpulses gestiegen sein, dann wirkt sich das in einer rhythmischen Alarmausgabe aus.

Die statistische Rauschüberwachungsstufe fehlt, da der Ferntestreizimpuls die Manipuliersicherheit übernimmt. Aus dem gleichen Grunde fehlt auch die statistische externe Rauschüberwachungsstufe.

**Patentansprüche**

1. Vorrichtung zur Failsafeprüfung einer Infrarotsensoranordnung mit wenigstens einem Infrarotsensor, der über Verstärker und wenigstens einen Alarmkomperator mit einem Signalprozessor verbunden ist, der auf das Ausgangssignal vom Infrarotsensor anspricht und ein Alarmsignal ausgibt, gekennzeichnet durch

   - einen ersten Komparator (1), an dem das verstärkte Ausgangssignal des Infrarotsensors (2) liegt und der dessen Signalpegel mit ersten bestimmten Schwellenwerten vergleicht und ein entsprechendes Impulssignal erzeugt,

   - wenigstens einen zweiten Komparator (3, 18), an dem das verstärkte Ausgangssignal des Infrarotsensors liegt und der dessen Signalpegel mit zweiten bestimmten Schwellenwerten vergleicht und ein entsprechendes Impulssignal erzeugt, wobei die Ausgangssignale des ersten Komparators (1) und des wenigstens einen zweiten Komparators (3, 18) am Signalprozessor (4) liegen, und

   - einen Infrarotsignalgeber (7), der so angeordnet ist, daß sein Ausgangssignal vom Infrarotsensor (2) erfaßt wird, und der über einen Impuls des Signalprozessors (4) in regelmäßigen Zeitabständen so angesteuert wird, daß er einen Infrarotimpuls definierter Breite und einer Höhe ausgibt, der zu einem Signal des Infrarotsensors (2) mit einem Pegel führt, der über der Höhe der Grundsignale des Infrarotsensors (2) und unter der Höhe der eigentlichen, einen alarmauslösenden Signale des Infrarotsensors (2) liegt, wobei der Signalprozessor (4) die zeitlichen Abstände der Impulse des Ausgangssignals des ersten Komparators (1) mit einem ersten Bezugszeitintervall vergleicht und beim Überschreiten des ersten Bezugszeitintervalls die Alarmgebereinrichtung (6) auslöst und die Zeitspanne, die vergeht, bis nach der Ausgabe des Impulses zum Ansteuern des Infrarotsignalgebers (7) der entsprechende Impuls des Ausgangssignals des wenigstens einen zweiten Komparators (3, 18) anliegt, mit einem zweiten Bezugszeitintervall vergleicht und beim Überschreiten des zweiten Bezugszeitintervalls oder bei fehlendem Reaktionsimpuls die Alarmgebereinrichtung (6) auslöst, während der Signalprozessor (4) während des zweiten Bezugszeitintervalls den Vergleich des Ausgangssignals des ersten Komparators (1) mit dem ersten Bezugszeitintervall aussetzt.

2. Vorrichtung nach Anspruch 1, dadurch gekennzeichnet, daß ein Alarmkomparatorpaar (15, 19) sowie ein Paar zweiter Komparatoren (3, 18) vorgesehen sind, wobei ein Komparator jedes Komparatorpaares (15, 19; 3, 18) auf die positive und der andere Komparator auf die negative Abkühlkurve anspricht.

3. Vorrichtung nach Anspruch 1 oder 2, dadurch gekennzeichnet, daß der Signalprozessor (4) auf die Eingangssignalflanken anspricht.

4. Vorrichtung nach Anspruch 1, 2 oder 3, gekennzeichnet durch eine Zwangsalarmsignalansteuerstufe (5), die zwischen die Ausgänge des Signalprozessors (4) für die Auslösesignale und die Alarmgebereinrichtung (6) geschaltet ist.

5. Vorrichtung nach einem der Ansprüche 1 bis 4, gekennzeichnet durch einen weiteren Infrarotsensor (8), der außerhalb des Gehäuses (11) des wenigstens einen Infrarotsensors (2) angeordnet ist, eine hohe Empfindlichkeit hat und über einen dritten Komparator (9) und einen Monoflop (20) mit dem Signalprozessor (4) verbunden ist, wobei der dritte Komparator (9) die Ausgangssignale des weiteren Infrarotsensors (8) mit dritten Schwellenwerten vergleicht und ein entsprechendes Impulssignal an den Signalprozessor (4) legt, der seinerseits die zeitlichen Abstände der Impulse dieses Impulssignals mit einem dritten vom Monoflop (20) festgelegten Bezugszeitintervall vergleicht und beim Überschreiten des dritten Bezugszeitintervalls die Alarmgebereinrichtung (6) auslöst.

6. Vorrichtung nach Anspruch 4, gekennzeichnet durch einen Koinzidenzgenerator (16), der einen Takt für den Signalprozessor (4) erzeugt und diesen gleichfalls an die Zwangsalarmsignalansteuerstufe (5) legt, so daß bei einem Ausfall des Taktes vom Signalprozessor (4) ein Alarmsignal an die Alarmgebereinrichtung (6) gelegt wird.

7. Vorrichtung nach Anspruch 4, gekennzeichnet durch eine Prozeßüberwachungsstufe (10), die zwischen den Signalprozessor (4) und die Zwangsalarmsignalansteuerstufe (5) geschaltet ist und bei einer Störung der internen Arbeitsvorgänge des Signalprozessors (4) die Zwangsalarmsignalansteuerstufe (5) so ansteuert, daß die Alarmgebereinrichtung (6) ausgelöst wird.

8. Vorrichtung nach einem der vorhergehenden Ansprüche, dadurch gekennzeichnet, daß das Alarmsignal an einem Alarm- oder Abschaltrelais liegt, von dem eine Rückmeldung zum Signalprozessor (4) vorgesehen ist.

Fig.1

# Fig. 2A

# Fig.2B

# Fig. 2C

# Fig. 2D

ZA2
Alarm-
Ausgabe

ab hier letzter Triggerpunkt
für 6 Min. Laufzeit

letzt. Tr.Pkt.
f. 6 Min. Laufzeit

(l)

MonoFlop

Ext.
Rausch (m)

6 Min.

6 Min.

5   10   15   20   t (Min)

Auf Abstand stabilisierte Vorspannung

Abstand

von der Zugluft verschobene Vorspannung

Sensor-Eigenrauschen

EP 0 463 339 A2

# Fig.2E

ZA 2
Alarm
Ausgabe

Anstartungen während Testreiz

ab hier letzter Triggerpunkt
für 1 Min. Laufzeit

Toröffnung
o.m
μP Eing. 1

Int.
RAUSCH (f)

1 Min.

letzter aufgetretener statistischer Impuls

erneut aufgetretener statist. Impuls

TESTREIZ (c)

"          (b)

"          (i)

TestReiz (k)
Imp.AUSG.

5 sec.          1          2          3          t (min)

EP 0 463 339 A2

Fig.3

EP 0 463 339 A2

Fig.4

EP 0 463 339 A2

Fig. 5